# EUROPEAN PATENT SPECIFICATION

(11) **EP 2 819 269 B1**
(45) Date of publication and mention of the grant of the patent: **23.03.2016**
(21) Application number: 13305913.9
(22) Date of filing: 28.06.2013
(51) Int. Cl.: H04B 3/48, H02J 13/00, H04B 3/54, H04L 12/24, H04L 12/26

(54) **Method and system for localizing a disturber in a PLC network**
Verfahren und System zur Lokalisierung eines Störers in einem PLC-Netzwerk
Procédé et système pour localiser une paire torsadée perturbatrice dans un réseau PLC

(43) Date of publication of application: 31.12.2014
(73) Proprietor: ALCATEL LUCENT, 92100 Boulogne-Billancourt (FR)
(72) Inventor: Dupuis, Nicolas, 4051 Chaudfontaine (BE); Drooghaag, Benoît, 1421 Ophain-Bois-Seigneur-Isaac (BE)
(74) Representative: ALU Antw Patent Attorneys

(56) References cited:
- WO-A1-2007/090891
- US-A1- 2007 179 721

## Description

### Field of the Invention

The present invention relates to the field of power line communication (PLC), and in particular to the field of fault localization in PLC networks.

### Background

In PLC networks, digital information is transmitted at high bit rates over a medium that was not originally designed for this purpose. As in the case of DSL, which uses telephone wiring for high-speed data transfer, the use of unstructured wiring poses many challenges, including high attenuation, noise, bridged taps, and cross-talk from other (similar or alien) transceivers. The power supply network has not been designed to transport information, it is usually a weaker link and there is therefore a need for diagnosis of occurring problems or limitations.

In electricity networks, end users often place additional devices in series with the PLC transceivers, which severely affect the quality of the channel. One class of such disturbers consists of surge protectors or electro-magnetic injuries filters. The presence of such disturbers may compromise the quality of service, which may cause the end user to contact their service provider for technical support. Presently, the service provider does not have adequate tools to remotely assess issues related to the subscriber's PLC network.

A type of limitation that seriously reduces the bitrate typically handled by such a Power Line Communication link - PLC link - or shortly a segment is the presence of an EMI-filter or a surge protector within the PLC network. This is what is targeted under the name of "disturbers" impacting the power line communication channel frequency response. Typically, such types of disturbers are used in order to protect devices against any types of electromagnetic interferences or damages.

Basically, these disturbers impact the channel frequency response between two PLC adapters i.e. PLC transceivers and therefore significantly limit the performances.

The European Patent Application with application number 12306157.4 and filing date 25 September, 2012 describes the detection of the presence of such channel disturber impacting the communication between two adapters and the details about the electrical design of the disturbers, their effect on the channel as well as on the detection algorithm.

However, by applying the method of this application, no clue about the location of such disturber with respect to the two PLC adapters is inferred. Moreover, within an e.g. domestic power line communication network, there are usually several PLC adapters. Detecting the presence of a disturber from a channel frequency curve evaluated between 2 paired adapters is not enough to take practical repair actions, i.e. to identify the amount of problematic disturbers unit as well as their location in order to take action on it e.g. to remove it.

Moreover, several disturbers, from different types, can also be present in several locations within such network.

So, there is a need for a system to take a more complete decision in order to separate, count and localize significant and independent disturbers. In other words, there is a need for quantifying the amount of impacting disturbers within such network in order to separate and localize them.

The purpose of this invention is to propose a system able to localize at least one disturber impacting the power line communication between PLC adapters and, if several are detected, to order them according to their respective impact on the performances. It has to be remarked here that it is not only the direct impact on the CFR, but it is more i.e. at the end of all the computation e.g. for all the channels, the amount of occurrence of impacted channels. This means that if many channels are impacted by a disturber, it has a global impact higher than if only some of the channels are impacted. Even in this case each of these channel frequency response information are each more "scaled" by the disturber.

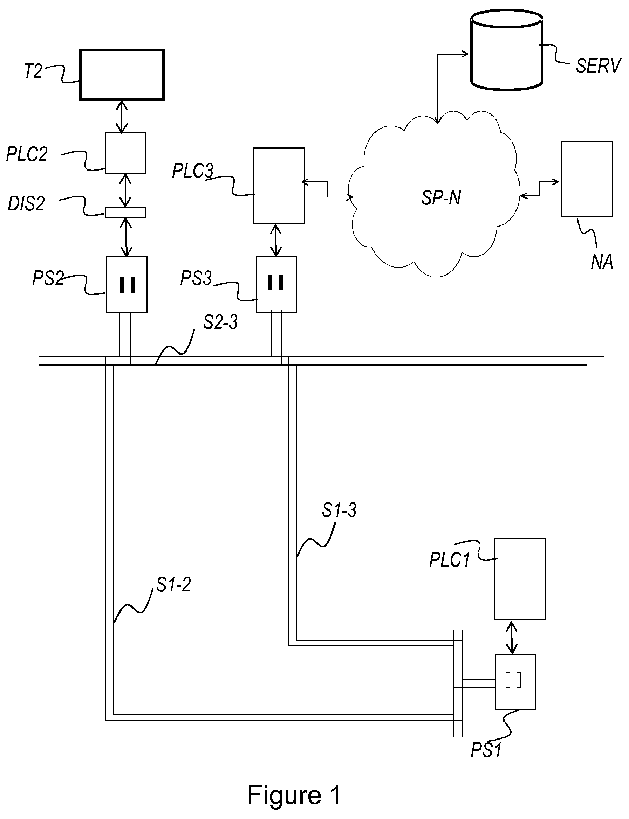

Indeed, when several power line adapters are set and organized as a network, many communication channels are set in order to establish a link between each of the PLC transceivers. This means that the amount of communication channels evolves more than proportionally with the number of adapters. Referring to Figure 1, each PLC transceiver defines a communication channel with each of the seen remote transceivers and measures for each a Channel Frequency Response (CFR). This also means that for a given physical wired link between 2 transceivers, there are always 2 CFRs, estimated from both sides i.e. segment S2-3 is coupled between transceiver PLC2 and PLC3. A management agent comprised in the PLC transceivers is enabled to collect and transmit channel frequency response information. In this way, the channel frequency response information being collected by a management agent of the PLC transceiver PLC2 over the segment S2-3 towards PLC transceiver PLC3 is called CFR2-3.

Furthermore it is clear that within e.g. a 4-PLC transceivers network, there are 6 communication links defined by 12 Channel Frequency Responses i.e. each seen from both sides of each segment. The amount of CFR curves increases more than linearly to the number of adapters:
N*(N-1) with N the number of PLC adapters

Indeed, as each transceiver is evaluating the communication channel toward each of the other transceiver in order to directly communicate in peer-to-peer, a given transceiver performs a frequency response measurement for each channel. This means that:
- for a 2- transceiver network, there are in total 2 curves available, one in each transceiver.
- for a 3- transceiver network, there are in total 6 curves available, two in each transceiver.
- for a 4- transceiver network, there are in total 12 curves available, three in each transceiver.
- for a N- transceiver network, there are in total N*(N-1) curves available, (N-1) in each transceiver.

Referring back to Figure 1, the presence of at least one disturber DIS2 located close to a given transceiver PLC2 is seen from a "close-end" by the closest transceiver PLC2 or from "far-end" by a remote transceiver PLC1.

In the event of more crowded power line networks as schematic shown in Figure 1 with a 3-transceiver power line network and one disturber e.g. a surge protection located close to the second transceiver PLC2 and where the first transceiver PLC1 is located far from the two others PLC2 and PLC3, difficulties to estimate the amount of disturbers and their location occur if only the channel frequency response curves are taken separately for each transceiver.

Indeed, as the disturber is present near the PLC2 transceiver and since the PLC3 transceiver is not far from the PLC2 transceiver and by contrast, the PLC1 transceiver is far from both, difficulties are introduced. Indeed, as the PLC1 transceiver is far, taking the channel frequency response estimated from this side i.e. CFR1-2 reports a detection of the disturber with a very low confidence, or even not detected at all, as its impact on the channel from this very far-end side. By contrast, the estimation of the presence of a disturber from PLC2 transceiver based upon CFR2-1 is severely impacted by the disturber and therefore the detection is reported with a high confidence. This is also the case for the CFR2-3 channel. However, as the PLC3 transceiver is close, the disturber is also seen clearly from the PLC3 transceiver based upon the CFR3-2 channel.

This example illustrates that, from one given CFR curve, taken alone, no reliable inference about the presence of a disturber can be made.

Indeed, from a CFR curve, no disturber would have been detected reliably with channel CFR12 only and, from channel CFR32 only, neither the reliability nor the impact would have helped to clearly give clues about the location of the disturber (far-end or near-end detection).

There is therefore clearly a need for an on-top system in order to reliably give clues about the presence and the location of a disturber.

An object of embodiments of the present invention is to facilitate determining of a location of at least one dominant disturber in a PLC network, in particular disturbers consisting of passive devices places in series with the PLC transceivers, more particular surge protectors or electro-magnetic injuries filters.

According to an aspect of the invention there is provided a method for determining a location of at least one dominant disturber in a PLC network comprising PLC transceivers interconnected by segments of the PLC network, the method comprising:
- determining disturber signals which are indicating the presence or absence of disturbers based upon obtained and processed channel frequency response information pertaining to a PLC transceiver of a segment; and
   - for at least one of the segments generating PLC transceiver statistics for PLC transceivers of the one segment based upon at least one of :
      - related disturber signals; and
      - related channel frequency response information,
      respectively related to one of said PLC transceivers of the segment; and
- applying a decision criterion to the generated PLC transceiver statistics to select one of the transceiver statistics indicating the dominant disturber being located in the proximity of the pertaining transceiver.

These steps are based inter alia on the insight that an on-top system in order to reliably give clues about the presence and the location of a disturber is required. A knowledge engine is generated on top of and by combining the individual channel frequency response information and the individual disturber signals indicating presence or absence of disturbers. PLC transceiver statistics are generated for each individual segment. Moreover, the overall transceiver statistics of each segment are analyzed under a decision criterion to determine a most dominant disturber and an indication of its location i.e. the PLC transceiver to which this most dominant disturber is located nearby. In this way, to improve the disturber detection reliability and to identify if there are several ones as well as to be able to localize the most impacting ones, further processing is performed i.e. with the information of disturber detection from each side of a channel i.e. detection of an impacting disturber in e.g. CFR12 measured at PLC1 transceiver and/or CFR21 measured at PLC2 transceiver, for the segment between PLC1 transceiver and PLC2 transceiver, and by repeating this retrieval of information for any segment, statistics about the amount of disturber channels can be obtained.

A Power line communication System is described in the International Application with Publication Number WO 2007/090891 A1. The application relates to a network surveillance method for a powerline communication system, applicable on any one of the terminals connected to a modem forming the network. Following the bidirectional measurement of the bit rates, the method consists in deducing there from a network quality index and identifying and locating the interfering element if the quality index is deemed inadequate.

A System and method for detecting noise in a power line communication system is described in the United States Patent Application with Publication number US 2007/0179721A1. The application describes in one embodiment, that the method includes the steps of receiving link quality data for a first power line communication link between a first and second power line communications device, determining an asymmetry in the link quality data of the link, and determining location information for the noise source based on the location of the first power line communicatioins device or the location of the second power line communications device.

### Summary

The method according to the present invention comprises in the step of generating PLC transceiver statistics in the event when the related disturber signals both indicate a presence of a disturber:
fitting the related channel frequency response information to each other and hereby calculating at least one parameter representative of the difference between both; and
furthermore, in the event when the at least one parameter exceeding a predefined threshold, applying a first additional weight to a PLC transceiver statistics pertaining to the transceiver with a most impacted channel frequency response information by the disturber; and otherwise applying a first additional weight to both PLC transceiver statistics.

This particular choice of fitting both CFR information is based on the inventors' insight that it is important if the two CFR curves, measured at both sides of a given segment, have been identified as being significantly impacted by a disturber, there is a need for identifying if it comes from one single disturber, strong enough to have an effect on both ends, or if it comes from different disturbers. Therefore a correlation between the two metrics is performed by means of the calculation of at least one parameter. If there is a high correlation i.e. in the event when the parameter exceeds a predefined threshold, the probability of having the two measurements impacted by the same source is high. In such a situation, tracking which transceiver is the most impacted gives already a clue about the potential presence of the disturber next to it. Hereby a first additional weight is applied to its transceiver statistics. It has to be explained that a most impacted transceiver is the transceiver which has a CRF being mostly modulated by the shape of the disturber signal i.e. the CFR which is the most severely scaled by the disturber signal.

In this way, the statistics about the presence of a disturber near the most impacted adapter increases. Furthermore, applying additional weight for either only one PLC transceiver statistic or for both statistics is based on the insight that in the event when there is no correlation between the two CFRs, the presence of distinct disturbers from different types is inferred. The statistics for having two separate disturbers at each side of the segment increases i.e. applying additional weight to both PLC transceiver statistics of the segment.

In an embodiment of the method according to the present invention, before the step of fitting, a downsampling of the channel frequency response information is performed, and wherein said at least one parameter comprises distinct evaluation of the same function at different levels of downsampling. It is an advantage of this embodiment that information about features present in the channel frequency response is optimally used by analyzing it at different resolutions. By means of downsampling and filtering the two CFRs, the amount of data of the CFR's that must be compared is reduced and generalized. The correlation between the two metrics captures the global trend and is less sensitive to topological effects.

In an embodiment of the method according to the present invention the step of generating PLC transceiver statistics comprises in the event when only one of the related disturber signals indicates a presence of a disturber, applying a second additional weight to the PLC transceiver statistic of the PLC transceiver pertaining to said one disturber signal. This embodiment is based inter alia on the insight of the inventors that if only one of the two CFR curves of a segment is significantly impacted by a disturber, the probability of having the disturber next to the impacted PLC transceiver is high. The related transceiver statistics of the PLC transceiver near the presumed disturber are increased, however with some prudence i.e. only with a value of a second additional weight.

In an embodiment of the method according to the present invention the step of generating PLC transceiver statistics comprises defining the first additional weight bigger as the second additional weight. Indeed, due to the insight of the inventors that in the event when a suspected presence of a disturber is confirmed by the two disturber signals of a segment and moreover by means of a correlation of two CFR's, the probability of the presence of a disturber in that segment is bigger as in the situation whereby only one disturber signal confirms the presence of a disturber on the segment. Therefore the first additional weight receives a bigger as the second additional weight to apply on the respective PLC transceiver statistics.

In a particular embodiment the PLC transceiver statistics are implemented with respective counters.

In an embodiment of the method the step of selecting comprises determining a PLC transceiver statistic with a biggest weight.

In an embodiment of the present invention the method further comprises applying a further decision criterion on the generated PLC transceiver statistic for determining a number of disturbers. Indeed, as described above, although that each disturber signal on its own is indicating a presence or absence of a disturber. The number of disturbers may not just be counted as such since different disturber signals might indicate an identical disturber. Based on the present method all real disturbers can be identified by counting the PLC statistics with the biggest weight.

According to an aspect of the present invention, there is provided a computer program comprising software means configured to perform, when executed, the method as described above.

According to an aspect of the present invention, there is provided a system for determining a location of at least one dominant disturber in a PLC network comprising PLC transceivers interconnected by segments of the PLC network, the system comprising:
- a first processor configured to determine disturber signals indicating presence or absence of disturbers based upon obtained and processed channel frequency response information pertaining to a PLC transceiver of a segment; and
   - a plurality of generators configured to generate for a respective one of the segments PLC transceiver statistics for PLC transceivers of the one segment based upon at least one of :
      - related disturber signals; and
      - related channel frequency response information,
      respectively related to one of the PLC transceivers of the segment; and
- a second processor configured to apply a decision criterion to the generated PLC transceiver statistics to select one of the transceiver statistics indicating the dominant disturber being located in the proximity of the pertaining transceiver.

The technical effects and advantages of the computer program an system according to the present invention correspond mutatis mutandis to those of the corresponding embodiments of the method according to the present invention.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

### Brief Description of the Figures

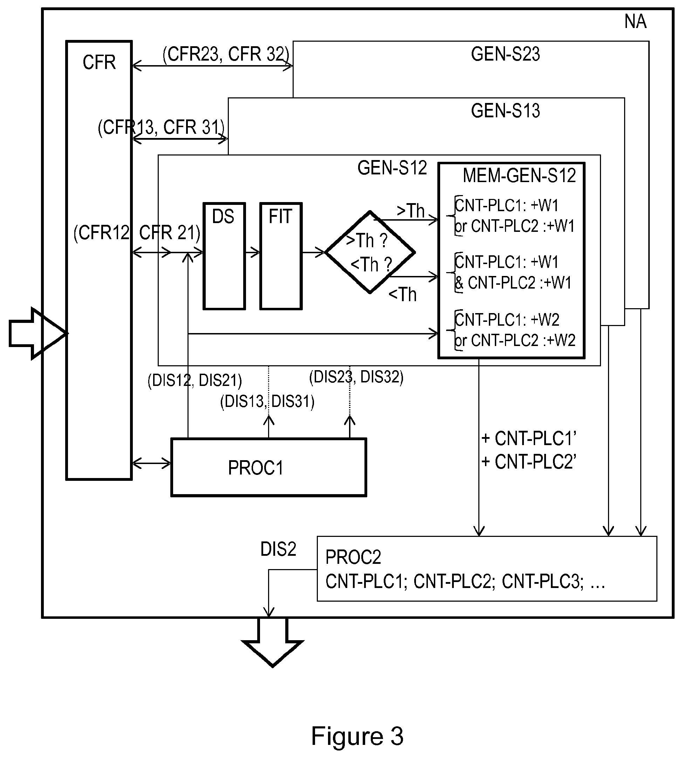

The working of the system according to the present invention in accordance with its telecommunication environment that is shown in Figure 3 will be explained by means of a functional description of the different blocks shown therein. Based on this description, the practical implementation of the blocks will be obvious to a person skilled in the art and will therefore not be described in details. In addition, the principle working of the method for determining a location of at least one dominant disturber will be described in further detail.

Some embodiments of apparatus and/or methods in accordance with embodiments of the present invention are now described, by way of example only, and with reference to the accompanying drawings, in which:
Figure 1 provides an overview of an exemplary network in which the present invention may be applied;
Figure 2 provides a flow chart of an exemplary embodiment of the method according to the present invention;
Figure 3 provides a schematic illustration of a system according to an embodiment of the present invention.

### Description of Embodiments

Figure 1 provides an overview of an exemplary network in which the present invention may be applied. An end user apparatus such as a television set T2 is provided with a PLC transceiver PLC2 for communication over power wiring segment S2-3 via a second power socket PS2. At a power socket PS3 connected to the same power wiring S2-3, a modem with a PLC transceiver PLC3 bridges between the PLC network and any appropriate access interface, providing access to a service provider network SP-N and preferably the Internet. The access interface may for instance include an interface for an xDSL, xPON, WMAN, or 3G link.

The service provider network SP-N preferably connects to one or more servers SERV that provide services to the end user, such as a TV-over-IP of Video-on-Demand service. The service provider network SP-N preferably also connects to a management server NA, such as the Alcatel-Lucent "Network Analyzer", which is capable of detecting problems in the end-to-end network between the relevant servers SERV and the end user devices T2.

A third power socket PS1 is connected via a first segment S1-2 and a second segment S1-3 to respectively the first power socket PS2 and the second power socket PS3.

This power socket PS1 is connected to a PLC1 transceiver to serve also an end user apparatus (not shown).

Although only three PLC devices are shown in Figure 1, this is done to illustrate the concept in the simplest way, without intending to limit the invention in any way.

In the illustrated network, a surge protector DIS2 is present between the power socket PS2 and the PLC transceiver PLC2. The term "surge protector" is used herein to use any kind of EMI filter, as is commonly used by consumers to protect sensitive electrical or electronic equipment, which is placed in series (bipolar) between the electrical grid and the equipment. The presence of this surge protector DIS2 will affect the properties of the channel segments as experienced between the respective PLC transceivers PLC2 / PLC3 and PLC2/PLC1, and in each direction.

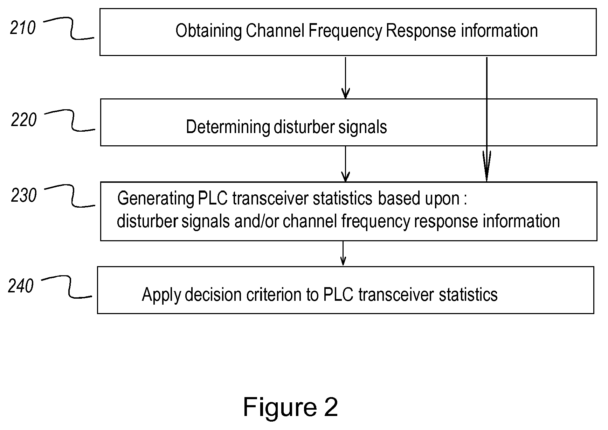

Figure 2 provides a flow chart of an exemplary embodiment of the method according to the present invention. The method is applied to a PLC network comprising three PLC transceivers PLC1, PLC2 and PLC3 connected by three segments S2-3, S1-2 and S1-3. It is an object of this embodiment to detect at least one dominant disturber in this PLC network and to determine its location. For clarity purposes, the network will be explained with reference to the elements illustrated in Figure 1.

The method is typically applied when problems are detected at the service level, e.g. when a subscriber notices that the quality of a received TV-over-IP signal is unsatisfactory, or the internet connection is perceived to be slow. In such cases, the subscriber will typically contact the service provider's help desk, who will need to be able to assess the situation. The detection of the different disturbers, in particular the surge protector DIS2, is preferably carried out without sending a technician to the site.

In a first step, the illustrated method comprises 210 obtaining channel frequency response information pertaining to the PLC network. The term "channel frequency response information" is used herein to denote digital information representing the transfer function of the channel between a PLC transmitter and a PLC receiver, as actually measured at the receiver side. It has to be remarked that herein that as well the transmitter as receiver are called "transceiver". As it consists of a digital representation of a measured function, it will be discretized and quantized. The channel frequency response may be obtained by carrying out an on-site measurement using dedicated equipment, but it is preferably read remotely, e.g. by the management server NA, from each PLC transceiver's management agent. It should be noted that the capability of performing a channel frequency response measurement is inherent in PLC transceivers according to the presently deployed technologies, because these technologies use Orthogonal Frequency Division Multiplexing OFDM modulation, and the channel information is used to carry out bit loading algorithms. The channel frequency response information is obtained for the different segments of the network and for each such segment for its both sides.

In a second step 220 disturber signals are determined. As described in the above mentioned European Patent Application, disturber signals indicating presence or absence of disturbers, are determined based upon obtained and processed channel frequency response information. Indeed, an undisturbed channel extrapolation is fitted to the different obtained channel frequency response information. The fitted undisturbed channel extrapolation is a characteristic of the normal frequency-dependent signal attenuation that would be expected on an undisturbed transmission line of a given length. Conceptually, the fitting consists of estimating the length of the channel, and thus the shape of the channel frequency response that would be measured on this network in the absence of disturbers. However, the fitting process does not necessarily include an actual length estimation step.

In a third step 230 PLC transceiver statistics are generated based upon: disturber signals and/or channel frequency response information. This generation is performed for all segments for which the disturber signals and the CFR information is available.

It has to be remarked that in the event when two related disturber signals i.e. the disturber signals based upon CFR's being performed by two PLC's at both ends of a segment, both indicate a presence of a disturber, preferably a fitting of the related CFR channel frequency response information to each other is performed. Such a fitting i.e. a correlation of both CFR's is performed in a similar way as the fitting of a CFR to an undisturbed CFR as shortly described above an more in details describe in the above mentioned application and repeated here below : at least one parameter representative of the difference between both channel frequency response information CFR's is calculated. Preferably, the at least one parameter comprises a maximum value over all values in a relevant frequency domain of the difference between an attenuation given by one channel frequency response information and an attenuation given by the other channel frequency response information and/or a summation or integration over a relevant frequency domain of the difference between an attenuation given by the one channel extrapolation and an attenuation given by the other channel frequency response information. The former parameter graphically corresponds to the maximal difference between the two curves (the two measured CFR's), while the latter parameter graphically corresponds to the area between the same two curves.

The channel frequency response information may be firstly be downsampled at one or more levels for both CFR's. The downsampling may be carried out by calculating predetermined percentile values over a variable numbers of bins. Good results have been obtained by assigning the 50-percentile or the 90-percentile value to each bin.

In the event when the calculated at least one parameter which is representative for the difference between both CFR's exceeds a predefined threshold it can be deducted that indeed a disturber is present on the segment between both PLC's. If hereby also one of both CFR's is clearly more impacted as the other one, it is expected that this disturber is located on the side of the PLC of which its CFR is the most affected. A CFR of a PLC is modulated per tone by the CFR shape of the disturber signal. The most impacted one is the one which is the most severely scaled by this disturber CFR. So, in this way a first additional weight is applied on the PLC transceiver statistics of the PLC transceiver that has the most impacted CFR.

Otherwise, in the event when the at least one parameter is not exceeding the predefined threshold, it is expected that the correlation between both CFR's is not that big and in addition it is not clear on which side the disturber could be located. In this way a first additional weight is applied on both PLC transceiver statistics.

Furthermore, in the event when only one of the related disturber signals indicates a presence of a disturber, the step of generating PLC transceiver statistics comprises applying a second additional weight to the PLC transceiver statistics pertaining to the PLC transceiver associated to the disturber signal. This second additional weight has less impact as the above mentioned first additional weight since this disturber was not confirmed by an impact on the other CFR.

In a fourth step 240 decision criterion is applied to the generated "PLC transceiver statistics". Hereby one of the PLC transceiver statistics is selected which is an indication that the dominant disturber is located in the proximity of the pertaining transceiver and is affecting its power plug. An embodiment of the present invention determines a biggest PLC transceiver statistics which indicates that a dominant disturber is located in its proximity and it affecting its power plug.

When repeating this inference for all the channels, there is a building of statistics that lead to identify and separate, by their numerous impacting detections, the real dominant disturbers from the disturber seen from remote. From these statistics therefore, amount of independent impacting disturbers as well as their location can be estimated. Notice that the more PLC transceivers and therefore more channel measurements are available, the more accurate are the statistics and the more reliable is the inference and also more important the ability to localize them in the PLC network. This localization ability is therefore particularly valuable to guide the customer to the problem such as he can solve easily the problem by himself. This is particularly helpful for a self-care application. Moreover, not only more reliably the presence of such channel disturber is determined, but also the counting of the amount of impacting disturbers within the PLC network is realized. This allows giving accurate repair actions in order to remove these channel disturbers i.e. the end-user knows where to check.

Figure 3 provides a schematic illustration of a system according to an embodiment of the present invention. The illustrated system comprises an input interface and an output interface (broad arrows), a Channel Frequency Response information storage CFR, a first processor PROC1, a second processor PROC2 and a plurality of generators which comprises each a downsampler DS, a fitter FIT, a Threshold comparator TH and a memory for the PLC transceiver statistics MEM-GEN-S12.

The operation of these functional blocks is in accordance with the method as described with reference to Figure 2.

The input interface is configured to obtain channel frequency response information pertaining to the examined segments of the PLC network. The output interface is configured to provide the information regarding a dominant disturber.

The obtained channel frequency response information is received and stored in the CFR storage. The first processor PROC1 is connected to the CFR storage and configured to determine disturber signals indicating presence or absence of disturbers based upon obtained and processed channel frequency response information pertaining to a PLC transceiver of a segment. The first processor PROC1 is interconnected to the plurality of generators GEN-S12, GEN-S13 and GEN-S23 which are each as well coupled to the CFR storage and to the second processor PROC2. Each one (for clarity sake the details for only generator GEN-S12 will be mentioned hereafter) of the plurality of generators GEN-S12, GEN-S13 and GEN-S23 is configured to generate, for a respective one of the segments S12, PLC transceiver statistics CNT-PLC1 and CNT-PLC2 for PLC transceivers PLC1 and PLC2 of the segment based upon at least one of :
- related disturber signals DIS12 and DIS21; and
- related channel frequency response information CFR12 and, CFR21, respectively related to one of the PLC transceivers of the segment S12.

The required disturber signals for segment GEN-S12 are collected from the first processor PROC1. This is shown with a full line. However the similar coupling towards the other generators is shown only partly with a dotted line. The required channel frequency response information CFR12 and CFR21 is collected from the CFR storage. In the event when the related disturber signals both indicate a presence of a disturber
(DIS12 = 1 ; DIS21 = 1) (1 : present; 0: absence)
the respective CFR information is collected from the CFR storage and processed. The downsampler DS downsamples CFR12 and CFR21 and provides the downsampled signals to the fitter. The fitter FIT i.e. a correlator fits the related CFR12 and CFR21 to each other and calculates hereby at least one parameter representative for the difference between both downsampled CFR's.

The calculated parameter is provided to the Threshold comparator TH where it is compared with a predefined Threshold.

This is shown with (bigger as) >TH ? or (smaller as) < TH?.

In the event when the parameter exceeds the predefined Threshold TH a first additional weight called W1 is applied to one PLC transceiver statistic CNT-PLC1 or to the other one CNT-PLC2 PLC, depending of which one's CFR being the most affected by the expected disturber:
CNT-PLC1: +W1 or CNT-PLC2 :+W1

In the event when the parameter is not exceeding the Threshold TH a first additional weight is applied to both PLC transceiver statistics CNT-PLC1 and CNT-PLC2 :
CNT-PLC1: +W1 & (and) CNT-PLC2 :+W1

In the event when only one e.g. DIS21 of the related disturber signals indicates a presence of a disturber, a second additional weight is applied to the PLC transceiver statistics CNT-PLC2 pertaining to the PLC transceiver PLC2 associated to that disturber signal:
CNT-PLC1: +W2 or CNT-PLC2 :+W2

When the generators finished generating the PLC transceiver statistics the generated values for the different PLC transceiver statistics are provided to the second processor PROC2. This is shown with CNT-PLC1' and CNT-PLC2'. It has to be understood that the second processor PROC2 might receive for a same PLC transceiver statistic different values of different generators since a same PLC transceiver might be coupled to different segments. All these values are summarized i.e. counted together to give the global value for the different PLC transceiver statistics which are shown in the second processor PROC2.

The second processor PROC2 is configured to apply a decision criterion to the generated PLC transceiver statistics, according to this embodiment: CNT-PLC1, CNT-PLC2, CNT-PLC3, to select one of the transceiver statistics e.g. CNT-PLC2 indicating the dominant disturber being located in the proximity of the pertaining transceiver PLC, here DIS2.

Based on the previously exposed observations, the described system is a method that makes use of each CFR measurement from all the PLC adapters in order to detect, with higher reliability, the presence of one or several disturbers, to infer about their number and to localize the most impacting ones, in order to provide practical repair actions.

Although methods and apparatus have been described hereinabove as separate embodiments, this is done for clarity purposes only, and it should be noted that features described only in connection with method embodiments may be applied in the apparatus according to the present invention to obtain the same technical effects and advantages, and vice versa.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A method for determining a location of at least one dominant disturber in a PLC network comprising PLC transceivers interconnected by segments of said PLC network, said method comprising:
- determining disturber signals (DIS12, DIS13, DIS21, DIS23, DIS31, DIS32) indicating presence or absence of disturbers based upon obtained and processed channel frequency response information (CFR12, CFR13, CFR21, CFR23, CFR31, CFR32) pertaining to a PLC transceiver of a segment; and
- for at least one (S12) of said segments generating PLC transceiver statistics (CNT-PLC1; CNT-PLC2) for PLC transceivers (PLC1, PLC2) of said one segment (S12) based upon at least one of :
- related disturber signals (DIS12, DIS21); and
- related channel frequency response information (CFR12, CFR21), respectively related to one of said PLC transceivers of said segment; and
- applying a decision criterion to said generated PLC transceiver statistics (CNT-PLC1, CNT-PLC2, CNT-PLC3) to select one of said transceiver statistics (CNT-PLC2) indicating said dominant disturber (DIS2) being located in the proximity of the pertaining transceiver (PLC2 **characterized in that** said step of generating PLC transceiver statistics comprises in the event that said related disturber signals (DIS12, DIS21) both indicate a presence of a disturber:
fitting said related channel frequency response information (CFR12, CFR21) to each other and hereby calculating at least one parameter representative of the difference between both;
furthermore in the event when said at least one parameter exceeding a predefined threshold applying a first additional weight to a PLC transceiver statistics (CNT-PLC2) pertaining to the transceiver (PLC2) with the most impacted channel frequency response information by said disturber; and otherwise applying said first additional weight to both PLC transceiver statistics (CNT-PLC1, CNT-PLC2).

2. The method according to claim 1, wherein before said step of fitting, downsampling said channel frequency response information, and wherein said at least one parameter comprises distinct evaluation of the same function at different levels of downsampling.

3. The method according to any of the preceding claims, wherein in the event when only one (DIS21) of said related disturber signals indicates a presence of a disturber, said step of generating PLC transceiver statistics comprises applying a second additional weight to the PLC transceiver statistics (CNT-PLC2) pertaining to the PLC transceiver (PLC2) associated to that disturber signal.

4. The method according to claim 3, wherein said step of generating PLC transceiver statistics comprises defining said first additional weight bigger as said second additional weight.

5. The method according to any of the preceding claims, wherein said PLC transceiver statistics being implemented with respective counters.

6. A computer program comprising software means configured to perform, when executed, the method of any of the preceding claims.

7. A system for determining a location of at least one dominant disturber in a PLC network comprising PLC transceivers interconnected by segments of said PLC network, said system comprising:
- a first processor (PROC1) configured to determine disturber signals (DIS12, DIS13, DIS21, DIS23, DIS31, DIS32) indicating presence or absence of disturbers based upon obtained and processed channel frequency response information (CFR12, CFR13, CFR21, CFR23, CFR31, CFR32) pertaining to a PLC transceiver of a segment; and
- a plurality of generators (GEN-S12, GEN-S13, GEN-S23) configured to generate for a respective one (S12) of said segments PLC transceiver statistics (CNT-PLC1, CNT-PLC2) for PLC transceivers (PLC1, PLC2) of said one segment (S12) based upon at least one of :
- related disturber signals (DIS12, DIS21); and
- related channel frequency response information (CFR12, CFR21),
respectively related to one of said PLC transceivers of said segment; and
- a second processor configured to apply a decision criterion to said generated PLC transceiver statistics (CNT-PLC1, CNT-PLC2, CNT-PLC3) to select one of said transceiver statistics (CNT-PLC2) indicating said dominant disturber (DIS2) being located in the proximity of the pertaining transceiver (PLC2),
**characterized in that** said plurality of generators is further included,
in the event that
said related disturber signals (DIS12, DIS21) both indicate a presence of a disturber:
to fit said related channel frequency response information (CFR12, CFR21) to each other and hereby to calculate at least one parameter representative of the difference between both; and
furthermore in the event when said at least one parameter exceeding a predefined threshold to apply a first additional weight to a PLC transceiver statistics (CNT-PLC2) pertaining to the transceiver (PLC2) with the most impacted channel frequency response information by said disturber; and otherwise to apply said first additional weight to both PLC transceiver statistics (CNT-PLC1, CNT-PLC2).

## Patentansprüche

1. Verfahren zum Bestimmen einer Position von mindestens einem dominanten Störer in einem PLC-Netzwerk, umfassend PLC-Transceiver, die durch Segmente des besagten PLC-Netzwerks miteinander verbunden sind, wobei besagtes Verfahren Folgendes umfasst:
- Bestimmen von Störsignalen (DIS12, DIS13, DIS21, DIS23, DIS31, DIS32), welche die Anwesenheit oder Abwesenheit von Störern anzeigen, basierend auf erhaltenen und verarbeiteten Kanalfrequenz-Antwortinformationen (CFR12, CFR13, CFR21, CFR23, CFR31, CFR32), die zu einem PLC-Transceiver eines Segments gehören; und
- für mindestens eines (S12) der besagten Segmente, Erzeugen von PLC-Transceiver-Statistiken (CNT-PLC1; CNT-PLC2) für PLC-Transceiver (PLC1, PLC2) des besagten einen Segments (S12), basierend auf mindestens einem aus:
- zugehörigen Störsignalen (DIS12, DIS21); und
- zugehörigen Kanalfrequenz-Antwortinformationen (CFR12, CFR21),
jeweils zugehörig zu einem der besagten PLC-Transceiver des besagten Segments; und
- Anwenden eines Entscheidungskriteriums auf die besagten erzeugten PLC-Transceiver-Statistiken (CNT-PLC1, CNT-PLC2, CNT-PLC3), um eine der besagten Transceiver-Statistiken (CNT-PLC2) auszuwählen, die den besagten dominanten Störer (DIS2) anzeigt, der sich in der Nähe des zugehörigen Transceivers (PLC2) befindet, **dadurch gekennzeichnet, dass** der besagte Schritt des Erzeugens von PLC-Transceiver-Statistiken für den Fall, dass
besagte zugehörige Störsignale
(DIS12, DIS21) beide eine Anwesenheit eines Störers anzeigen, Folgendes umfasst:
Anpassen der besagten zugehörigen Kanalfrequenz-Antwortinformationen (CFR12, CFR21) zueinander und hierbei das Berechnen von mindestens einem Parameter, der für die Differenz zwischen den beiden bezeichnend ist;
ferner für den Fall, wenn der besagte mindestens eine Parameter einen vorausdefinierten Grenzwert übersteigt, das Anwenden eines ersten Zusatzgewichts auf eine PLC-Transceiver-Statistik (CNT-PLC2), die zum Transceiver (PLC2) mit den vom besagten Störer meist betroffenen Kanalfrequenz-Antwortinformationen gehört; und andernfalls das Anwenden des besagten ersten Zusatzgewichts auf beide PLC-Transceiver-Statistiken (CNT-PLC1, CNT-PLC2).

2. Verfahren nach Anspruch 1, wobei vor dem besagten Schritt des Anpassens ein Downsampling der besagten Kanalfrequenz-Antwortinformationen erfolgt, und wobei der besagte mindestens eine Parameter eine eindeutige Evaluierung der gleichen Funktion auf unterschiedlichen Downsampling-Stufen umfasst.

3. Verfahren nach einem beliebigen der vorstehenden Ansprüche, wobei für den Fall, wenn nur eines (DIS21) der besagten zugehörigen Störsignale eine Anwesenheit eines Störers anzeigt, der besagte Schritt des Erzeugens von PLC-Transceiver-Statistiken das Anwenden eines zweiten Zusatzgewichts auf die PLC-Transceiver-Statistik (CNT-PLC2) umfasst, die zum PLC-Transceiver (PLC2) gehört, der diesem Störsignal zugeordnet ist.

4. Verfahren nach Anspruch 3, wobei der besagte Schritt des Erzeugens von PLC-Transceiver-Statistiken das Definieren umfasst, dass das besagte erste Zusatzgewicht größer ist als das besagte zweite Zusatzgewicht.

5. Verfahren nach einem beliebigen der vorstehenden Ansprüche, wobei besagte PLC-Transceiver-Statistiken mit jeweiligen Zählern implementiert werden.

6. Computerprogramm, umfassend Softwaremittel, die ausgelegt sind, um, bei Ausführung, das Verfahren nach einem beliebigen der vorstehenden Ansprüche durchzuführen.

7. System zum Bestimmen einer Position von mindestens einem dominanten Störer in einem PLC-Netzwerk, umfassend PLC-Transceiver, die durch Segmente des besagten PLC-Netzwerks miteinander verbunden sind, wobei besagtes System Folgendes umfasst:
- einen ersten Prozessor (PROC1), der ausgelegt ist zum Bestimmen von Störsignalen (DIS12, DIS13, DIS21, DIS23, DIS31, DIS32), welche die Anwesenheit oder Abwesenheit von Störern anzeigen, basierend auf erhaltenen und verarbeiteten Kanalfrequenz-Antwortinformationen (CFR12, CFR13, CFR21, CFR23, CFR31, CFR32), die zu einem PLC-Transceiver eines Segments gehören; und
- eine Vielzahl von Generatoren (GEN-S12, GEN-S13, GEN-S23), die ausgelegt sind, um für ein jeweiliges (S12) der besagten Segmente PLC-Transceiver-Statistiken (CNT-PLC1, CNT-PLC2) für PLC-Transceiver (PLC1, PLC2) des besagten einen Segments (S12) zu erzeugen, basierend auf mindestens einem aus:
- zugehörigen Störsignalen (DIS12, DIS21); und
- zugehörigen Kanalfrequenz-Antwortinformationen (CFR12, CFR21), jeweils zugehörig zu einem der besagten PLC-Transceiver des besagten Segments; und
- einen zweiten Prozessor, der ausgelegt ist zum Anwenden eines Entscheidungskriteriums auf die besagten erzeugten PLC-Transceiver-Statistiken (CNT-PLC1, CNT-PLC2, CNT-PLC3), um eine der besagten Transceiver-Statistiken (CNT-PLC2) auszuwählen, die den besagten dominanten Störer (DIS2) anzeigt, der sich in der Nähe des zugehörigen Transceivers (PLC2) befindet,
**dadurch gekennzeichnet, dass** die besagte Vielzahl von Generatoren weiterhin enthalten ist, um
für den Fall, dass
besagte zugehörige Störsignale (DIS12, DIS21) beide eine Anwesenheit eines Störers anzeigen:
die besagten zugehörigen Kanalfrequenz-Antwortinformationen (CFR12, CFR21) zueinander anzupassen und hierbei mindestens einen Parameter, der für die Differenz zwischen den beiden bezeichnend ist, zu berechnen; und um
ferner für den Fall, wenn der besagte mindestens eine Parameter einen vorausdefinierten Grenzwert übersteigt, ein erstes Zusatzgewicht auf eine PLC-Transceiver-Statistik (CNT-PLC2) anzuwenden, die zum Transceiver (PLC2) mit den vom besagten Störer meist betroffenen Kanalfrequenz-Antwortinformationen gehört; und um andernfalls das besagte erste Zusatzgewicht auf beide PLC-Transceiver-Statistiken (CNT-PLC1, CNT-PLC2) anzuwenden.

## Revendications

1. Procédé de détermination d'un emplacement d'au moins un élément perturbateur dominant dans un réseau PLC comprenant des émetteurs/récepteurs PLC interconnectés par des segments dudit réseau PLC, ledit procédé comprenant les étapes suivantes :
- déterminer des signaux d'élément perturbateur (DIS12, DIS13, DIS21, DIS23, DIS31, DIS32) indiquant la présence ou l'absence d'éléments perturbateurs en se basant sur des informations de réponse en fréquence de canal (CFR12, CFR13, CFR21, CFR23, CFR31, CFR32) obtenues et traitées concernant un émetteur/récepteur PLC d'un segment ; et
- pour au moins l'un (S12) desdits segments, générer des statistiques d'émetteur/récepteur PLC (CNT-PLC1, CNT-PLC2) pour les émetteurs/récepteurs PLC (PLC1, PLC2) dudit segment (S12) en se basant sur au moins l'un des éléments suivants :
- signaux d'élément perturbateur (DIS12, DIS21) s'y rapportant ; et
- informations de réponse en fréquence de canal (CFR12, CFR21) s'y rapportant,
se rapportant respectivement à l'un desdits émetteurs/récepteurs PLC dudit segment ; et
- appliquer un critère de décision auxdites statistiques d'émetteur/récepteur PLC (CNT-PLC1, CNT-PLC2, CNT-PLC3) générées pour sélectionner l'une desdites statistiques d'émetteur/récepteur PLC (CNT-PLC2) indiquant ledit élément perturbateur dominant (DIS2) qui se trouve à proximité de l'émetteur/récepteur (PLC2) concerné, **caractérisé en ce que** ladite étape de générer des statistiques d'émetteur/récepteur PLC comprend, dans le cas où lesdits signaux d'élément perturbateur (DIS12, DIS21) s'y rapportant indiquent tous deux la présence d'un élément perturbateur :
ajuster lesdites informations de réponse en fréquence de canal (CFR12, CFR21) s'y rapportant les unes aux autres et ainsi calculer au moins un paramètre représentatif de la différence entre les deux ;
en outre, dans le cas où ledit au moins un paramètre dépasse un seuil prédéfini, appliquer un premier poids supplémentaire à une statistique d'émetteur/récepteur PLC (CNT-PLC2) concernant l'émetteur/récepteur (PLC2) dont les informations de réponse en fréquence de canal subissent l'impact le plus important par ledit élément perturbateur ; et sinon appliquer ledit premier poids supplémentaire aux deux statistiques d'émetteur/récepteur PLC (CNT-PLC1, CNT-PLC2).

2. Procédé selon la revendication 1, selon lequel, avant l'étape d'ajuster, sous-échantillonner lesdites informations de réponse en fréquence de canal, et selon lequel ledit au moins un paramètre comprend l'évaluation distincte de la même fonction à différents niveaux de sous-échantillonnage.

3. Procédé selon l'une quelconque des revendications précédentes, selon lequel, dans le cas où un seul (DIS21) desdits signaux d'élément perturbateur s'y rapportant indique la présence d'un élément perturbateur, ladite étape de générer des statistiques d'émetteur/récepteur PLC comprend appliquer un deuxième poids supplémentaire aux statistiques d'émetteur/récepteur PLC (CNT-PLC2) concernant l'émetteur/récepteur PLC (PLC2) associé à ce signal d'élément perturbateur.

4. Procédé selon la revendication 3, selon lequel ladite étape de générer des statistiques d'émetteur/récepteur PLC comprend définir ledit premier poids supplémentaire supérieur audit deuxième poids supplémentaire.

5. Procédé selon l'une quelconque des revendications précédentes, selon lequel lesdites statistiques d'émetteur/récepteur PLC sont mises en oeuvre avec des compteurs respectifs.

6. Programme informatique comprenant des moyens logiciels configurés pour mettre en oeuvre, lorsqu'ils sont exécutés, le procédé selon l'une quelconque des revendications précédentes.

7. Système de détermination d'un emplacement d'au moins un élément perturbateur dominant dans un réseau PLC comprenant des émetteurs/récepteurs PLC interconnectés par des segments dudit réseau PLC, ledit système comprenant :
- un premier processeur (PROC1) configuré pour déterminer des signaux d'élément perturbateur (DIS12, DIS13, DIS21, DIS23, DIS31, DIS32) indiquant la présence ou l'absence d'éléments perturbateurs en se basant sur des informations de réponse en fréquence de canal (CFR12, CFR13, CFR21, CFR23, CFR31, CFR32) obtenues et traitées concernant un émetteur/récepteur PLC d'un segment ; et
- une pluralité de générateurs (GEN-S12, GEN-S13, GEN-S23) configurés pour générer, pour l'un respectif (S12) desdits segments, des statistiques d'émetteur/récepteur PLC (CNT-PLC1, CNT-PLC2) pour les émetteurs/récepteurs PLC (PLC1, PLC2) dudit segment (S12) en se basant sur au moins l'un des éléments suivants :
- signaux d'élément perturbateur (DIS12, DIS21) s'y rapportant ; et
- informations de réponse en fréquence de canal (CFR12, CFR21) s'y rapportant,
se rapportant respectivement à l'un desdits émetteurs/récepteurs PLC dudit segment ; et
- un deuxième processeur configuré pour appliquer un critère de décision auxdites statistiques d'émetteur/récepteur PLC (CNT-PLC1, CNT-PLC2, CNT-PLC3) générées pour sélectionner l'une desdites statistiques d'émetteur/récepteur PLC (CNT-PLC2) indiquant ledit élément perturbateur dominant (DIS2) qui se trouve à proximité de l'émetteur/récepteur (PLC2) concerné,
**caractérisé en ce que** ladite pluralité de générateur est en outre incluse, dans le cas où lesdits signaux d'élément perturbateur (DIS12, DIS21) s'y rapportant indiquent tous deux la présence d'un élément perturbateur :
pour ajuster lesdites informations de réponse en fréquence de canal (CFR12, CFR21) s'y rapportant les unes aux autres et ainsi pour calculer au moins un paramètre représentatif de la différence entre les deux ; et
en outre, dans le cas où ledit au moins un paramètre dépasse un seuil prédéfini, pour appliquer un premier poids supplémentaire à une statistique d'émetteur/récepteur PLC (CNT-PLC2) concernant l'émetteur/récepteur (PLC2) dont les informations de réponse en fréquence de canal subissent l'impact le plus important par ledit élément perturbateur ; et autrement, pour appliquer ledit premier poids supplémentaire aux deux statistiques d'émetteur/récepteur PLC (CNT-PLC1, CNT-PLC2).
